# EUROPEAN PATENT APPLICATION

(11) **EP 4 462 690 A1**
(43) Date of publication of application: **13.11.2024**
(21) Application number: 23758888.4
(22) Date of filing: 04.01.2023
(51) Int. Cl.: H04B 1/38

(54) **RADIO-FREQUENCY FRONT-END CIRCUIT AND ELECTRONIC DEVICE**

(30) Priority: 25.02.2022 CN 202210176530
(71) Applicant: Huawei Technologies Co., Ltd., Shenzhen, Guangdong 518129 (CN)
(72) Inventor: HUANG, Tengfei, Shenzhen, Guangdong 518129 (CN); JIANG, Bo, Shenzhen, Guangdong 518129 (CN); CHEN, Xuming, Shenzhen, Guangdong 518129 (CN); SHEN, Yunpeng, Shenzhen, Guangdong 518129 (CN); ZHAO, Jing, Shenzhen, Guangdong 518129 (CN); JIAO, Lingxiao, Shenzhen, Guangdong 518129 (CN)
(74) Representative: Goddar, Heinz J.
(86) International application number: PCT/CN2023/070379
(87) International publication number: WO 2023/160262

(57) **Abstract**

Embodiments of this application relate to the electrical field, and in particular, to a radio frequency front-end circuit and an electronic device. The radio frequency front-end circuit includes a radio frequency front-end module and a first isolation element. The radio frequency front-end module includes a PA, an LNA, and a switch, and the PA is connected in series between a first integrated port and a second integrated port of the radio frequency front-end module. The LNA is connected in series between a third integrated port of the radio frequency front-end module and a first port of the switch. A second port of the switch is electrically connected to a fourth integrated port of the radio frequency front-end module. A common port of the switch is electrically connected to a fifth integrated port of the radio frequency front-end module, and the fifth integrated port is configured to be electrically connected to an antenna module. A first port of the isolation element is electrically connected to the second integrated port, a second port of the isolation element is electrically connected to the fourth integrated port, and the first port of the isolation element is unidirectionally conducted to the second port of the isolation element. In this layout design, performance of the radio frequency front-end circuit is not deteriorated due to adding of an isolation element.

## Description

This application claims priority to Chinese Patent Application No. 202210176530.6, filed with the China National Intellectual Property Administration on February 25, 2022 and entitled "RADIO FREQUENCY FRONT-END CIRCUIT AND ELECTRONIC DEVICE", which is incorporated herein by reference in its entirety.

### TECHNICAL FIELD

This application relates to the electrical field, and in particular, to a radio frequency front-end circuit and an electronic device.

### BACKGROUND

Generally, an electromagnetic wave with a frequency lower than 100 kHz is absorbed by the ground surface and cannot be effectively transmitted. An electromagnetic wave with a frequency higher than 100 kHz can be transmitted in the air and reflected by the ionosphere at the outer edge of the atmosphere, thereby developing a long-distance transmission capability. Such high-frequency electromagnetic wave with a long-distance transmission capability may be referred to as a radio frequency. However, in an electronic device, a transmitted electrical signal, for example, a voice signal, has a low frequency, and a maximum frequency is only hundreds of kHz. To transmit these low-frequency signals, a radio frequency module in the electronic device needs to modulate an electrical signal from a low-frequency band to a specified high-frequency band, for example, a 900 MHz global system for mobile communications (global system for mobile communications, GSM) communication technology frequency band, a 1.9 GHz long term evolution (long term evolution, LTE) communication technology frequency band, and a 3.5 GHz fifth generation (fifth generation, 5G) mobile communication system frequency band.

In the radio frequency module, after the electrical signal is modulated, power is low. The signal needs to be amplified by a power amplifier (power amplifier, PA) to obtain sufficient power. Then the signal is sent to an antenna module and transmitted to the outside by using the antenna module. A Doherty (Doherty) PA has advantages such as low power consumption, high efficiency, and good linearity, and is used in the radio frequency module. However, since the Doherty (Doherty) PA achieves high-efficiency amplification through active load pulling, it is sensitive to loads, and an isolation element needs to be disposed between the PA and the antenna module, to prevent an output load of the PA from affecting PA performance. In an electronic device, how to design a layout of the isolation element without introducing an additional insertion loss is an urgent problem to be resolved.

### SUMMARY

This application provides a radio frequency front-end circuit and an electronic device. An isolation element is added to the radio frequency front-end circuit, so that a PA is not affected by an output load, good working performance of the PA is maintained, and no additional insertion loss is introduced.

According to a first aspect, a radio frequency front-end circuit is provided, including: a radio frequency front-end module and a first isolation element. The radio frequency front-end module includes a first power amplifier PA, a first low noise amplifier LNA, and a first switch. The first PA is connected in series between a first integrated port and a second integrated port of the radio frequency front-end module. The first LNA is connected in series between a third integrated port of the radio frequency front-end module and a first port of the first switch. A second port of the first switch is electrically connected to a fourth integrated port of the radio frequency front-end module. A common port of the first switch is electrically connected to a fifth integrated port of the radio frequency front-end module, and the fifth integrated port is configured to be electrically connected to an antenna module. A first port of the first isolation element is electrically connected to the second integrated port, a second port of the first isolation element is electrically connected to the fourth integrated port, and the first port of the first isolation element is unidirectionally conducted to the second port of the first isolation element.

According to the technical solutions in embodiments of this application, the first isolation element is added between the first switch and the first PA, and a unidirectional conduction characteristic of the first isolation element is used, so that an output load of the first PA is not affected by a back-end circuit, and the output load of the first PA remains unchanged, thereby having good working performance. In addition, a quantity of switches is not increased, so that an additional insertion loss is avoided, and performance of the radio frequency front-end circuit is not deteriorated due to adding of an isolation element. In addition, because the first PA, the first LNA, and the first switch are integrated into the radio frequency front-end module, an area occupied by the layout of the first PA, the first LNA, and the first switch is reduced, and a quantity of times of closed beta testing of an electronic element is reduced. This effectively reduces costs.

With reference to the first aspect, in some implementations of the first aspect, the radio frequency front-end circuit further includes a radio frequency chip. The radio frequency chip includes a transmitting port and a receiving port. The transmitting port is electrically connected to the first integrated port of the radio frequency front-end module, and the receiving port is electrically connected to the third integrated port of the radio frequency front-end module.

According to the technical solutions in embodiments of this application, the radio frequency chip may be configured to modulate and demodulate a radio frequency signal, and may perform up-conversion (increase a frequency of the radio frequency signal) and down-conversion (reduce a frequency of the radio frequency signal) on the radio frequency signal.

With reference to the first aspect, in some implementations of the first aspect, the first isolation element is a circulator or an isolator.

According to the technical solutions in embodiments of this application, the isolator and the circulator may separately be used as the first isolation element. A difference lies in that the isolator is an isolation element including two ports, and the circulator is an isolation element including three ports and only two of the ports may be used in the radio frequency front-end circuit. Alternatively, the first isolation element may be another isolation element whose quantity of ports is greater than or equal to 2. This is not limited in this application.

With reference to the first aspect, in some implementations of the first aspect, the front-end module further includes a first filter. The first filter is connected in series between the first integrated port and the first PA.

With reference to the first aspect, in some implementations of the first aspect, the front-end module further includes a second filter. The second filter is connected in series between the first LNA and the first port of the first switch.

According to the technical solutions in embodiments of this application, a quantity of and locations of filters may be adjusted based on an actual design requirement. This is not limited in this application. For example, the radio frequency front-end circuit may include only one filter, and may be connected in series between the first LNA and the third integrated port.

With reference to the first aspect, in some implementations of the first aspect, the common port of the first switch includes a first common port and a second common port. The first common port is configured to be electrically connected to a first antenna element in the antenna module. The second common port is configured to be electrically connected to a second antenna element in the antenna module.

According to the technical solutions in embodiments of this application, the first switch may perform antenna element switching based on different environments (for example, a hand holding posture of a user or a location of the user relative to the antenna element), and select an antenna element with better performance to send and receive signals. For example, when the user holds the first antenna element, and radiation performance of the first antenna element is poor, the second antenna element may be selected to send and receive signals. In this case, the second common port is electrically connected to the second port and the first port separately in a timeslot corresponding to a transmitting signal and a timeslot corresponding to a receiving signal.

With reference to the first aspect, in some implementations of the first aspect, the radio frequency front-end circuit further includes a second isolation element. The radio frequency front-end module further includes a second PA, a second LNA, and a second switch. The second PA is connected in series between a sixth integrated port and a seventh integrated port of the radio frequency front-end module. The second LNA is connected in series between an eighth integrated port of the radio frequency front-end module and a first port of the second switch. A second port of the second switch is electrically connected to a ninth integrated port of the radio frequency front-end module. A common port of the second switch is electrically connected to a tenth integrated port of the radio frequency front-end module, and the tenth integrated port is configured to be electrically connected to the antenna module. A first port of the second isolation element is electrically connected to the seventh integrated port, a second port of the second isolation element is electrically connected to the ninth integrated port, and the first port of the second isolation element is unidirectionally conducted to the second port of the second isolation element.

According to the technical solutions in embodiments of this application, the radio frequency front-end circuit may include a plurality of transmitting channels and a plurality of receiving channels. The plurality of transmitting channels (or the plurality of receiving channels) may work at a same frequency, for example, in a multi-input multiple-output system, or may work at different frequencies.

According to a second aspect, an electronic device is provided, including the radio frequency front-end circuit according to any implementation of the first aspect.

With reference to the second aspect, in some implementations of the second aspect, the electronic device further includes an antenna module. The fifth integrated port is electrically connected to the antenna module.

With reference to the second aspect, in some implementations of the second aspect, the electronic device is a router.

According to a third aspect, a radio frequency front-end module and a first isolation element are provided. The radio frequency front-end module includes a first PA, a first LNA, and a first switch. The first PA is connected in series between a first integrated port and a second integrated port of the radio frequency front-end module. The first LNA is connected in series between a third integrated port of the radio frequency front-end module and a first port of the first switch. A second port of the first switch is electrically connected to a fourth integrated port of the radio frequency front-end module, and the fourth integrated port is grounded. A common port of the first switch is electrically connected to a fifth integrated port of the radio frequency front-end module. A first port of the first isolation element is electrically connected to the second integrated port, a second port of the first isolation element is electrically connected to the fifth integrated port, and a third port of the first isolation element is configured to be electrically connected to an antenna module. The first port of the first isolation element is unidirectionally conducted to the third port of the first isolation element, and the third port of the first isolation element is unidirectionally conducted to the second port of the first isolation element.

With reference to the third aspect, in some implementations of the third aspect, the radio frequency front-end circuit further includes a radio frequency chip. The radio frequency chip includes a transmitting port and a receiving port. The transmitting port is electrically connected to the first integrated port of the radio frequency front-end module, and the receiving port is electrically connected to the third integrated port of the radio frequency front-end module.

With reference to the third aspect, in some implementations of the third aspect, when the first integrated port receives a radio frequency signal, the common port of the first switch is electrically connected to the second port of the first switch.

With reference to the third aspect, in some implementations of the third aspect, the first isolation element is a circulator.

With reference to the third aspect, in some implementations of the third aspect, the front-end module further includes a first filter. The first filter is connected in series between the first integrated port and the first PA.

With reference to the third aspect, in some implementations of the third aspect, the front-end module further includes a second filter. The second filter is connected in series between the first LNA and the first port of the first switch.

With reference to the third aspect, in some implementations of the third aspect, the radio frequency front-end circuit further includes a second isolation element.

The radio frequency front-end module further includes a second PA, a second LNA, and a second switch. The second PA is connected in series between a sixth integrated port and a seventh integrated port of the radio frequency front-end module. The second LNA is connected in series between an eighth integrated port of the radio frequency front-end module and a first port of the second switch. A second port of the second switch is electrically connected to a ninth integrated port of the radio frequency front-end module, and the ninth integrated port is grounded. A common port of the second switch is electrically connected to a tenth integrated port of the radio frequency front-end module. A first port of the second isolation element is electrically connected to the seventh integrated port, a second port of the second isolation element is electrically connected to the tenth integrated port, and a third port of the second isolation element is configured to be electrically connected to the antenna module. The first port of the second isolation element is unidirectionally conducted to the third port of the second isolation element, and the third port of the second isolation element is unidirectionally conducted to the second port of the second isolation element.

According to a fourth aspect, an electronic device is provided, including the radio frequency front-end circuit according to any implementation of the third aspect.

With reference to the fourth aspect, in some implementations of the fourth aspect, the electronic device further includes an antenna module. The third port of the first isolation element is electrically connected to the antenna module.

With reference to the fourth aspect, in some implementations of the fourth aspect, the electronic device is a router.

### BRIEF DESCRIPTION OF DRAWINGS

FIG. 1 is a schematic diagram of an electronic device according to an embodiment of this application;
FIG. 2 is a schematic diagram of an internal circuit of an electronic device according to an embodiment of this application;
FIG. 3 is a schematic diagram of a radio frequency front-end circuit according to an embodiment of this application;
FIG. 4 is a schematic diagram of another radio frequency front-end circuit according to an embodiment of this application;
FIG. 5 is a schematic diagram of another radio frequency front-end circuit according to an embodiment of this application;
FIG. 6 is a schematic diagram of a radio frequency front-end circuit 100 according to an embodiment of this application;
FIG. 7 is a schematic diagram of a front-end module according to an embodiment of this application;
FIG. 8 is a schematic diagram of a radio frequency front-end circuit 300 according to an embodiment of this application;
FIG. 9 is a schematic diagram of another radio frequency front-end circuit 300 according to an embodiment of this application;
FIG. 10 is a schematic diagram of a front-end module according to an embodiment of this application;
FIG. 11 is a schematic diagram of another radio frequency front-end circuit 300 according to an embodiment of this application;
FIG. 12 is a schematic diagram of a radio frequency front-end circuit 500 according to an embodiment of this application;
FIG. 13 is a schematic diagram of a front-end module according to an embodiment of this application;
FIG. 14 is a schematic diagram of another radio frequency front-end circuit according to an embodiment of this application;
FIG. 15 is a schematic diagram of another radio frequency front-end circuit according to an embodiment of this application;
FIG. 16 is a schematic diagram of another radio frequency front-end circuit according to an embodiment of this application;
FIG. 17 is a schematic diagram of another radio frequency front-end circuit according to an embodiment of this application;
FIG. 18 is a schematic diagram of another radio frequency front-end circuit according to an embodiment of this application; and
FIG. 19 is a schematic diagram of another radio frequency front-end circuit according to an embodiment of this application.

### DESCRIPTION OF EMBODIMENTS

The following describes technical solutions of embodiments in this application with reference to accompanying drawings.

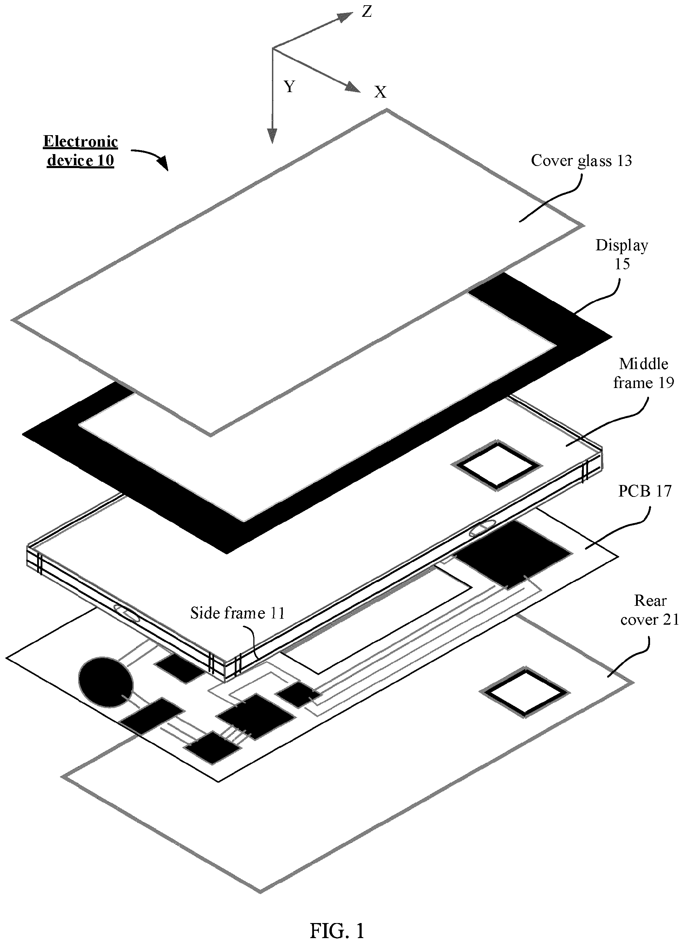

FIG. 1 is a schematic diagram of an electronic device according to an embodiment of this application.

It should be understood that the electronic device shown in FIG. 1 is described by using a smartphone as an example. In this embodiment of this application, the electronic device may be a tablet computer, a notebook computer, customer premises equipment (customer premises equipment, CPE), a router, a smart band, a smart watch, a smart helmet, smart glasses, or the like. The electronic device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an electronic device in a 5G network, an electronic device in a future evolved public land mobile network (public land mobile network, PLMN), or the like. This is not limited in embodiments of this application. The technical solutions provided in embodiments of this application are applicable to an electronic device that uses one or more of the following communication technologies: a Bluetooth (Bluetooth, BT) communication technology, a global positioning system (global positioning system, GPS) communication technology, a wireless fidelity (wireless fidelity, Wi-Fi) communication technology, a long term evolution (long term evolution, LTE) communication technology, a 5G communication technology, another future communication technology, and the like.

As shown in FIG. 1, the electronic device 10 may include a cover (cover) 13, a display/display (display) assembly 15, a printed circuit board (printed circuit board, PCB) 17, a middle frame (middle frame) 19, and a rear cover (rear cover) 21. It should be understood that, in some embodiments, the cover 13 may be cover glass (cover glass), or may be replaced with a cover of another material, for example, a cover of an ultra-thin glass material or a cover of a PET (Polyethylene terephthalate, polyethylene terephthalate) material.

The cover 13 may be disposed in close contact with the display assembly 15, and may be mainly configured to protect the display assembly 15 and prevent the display assembly from dust.

In an embodiment, the display assembly 15 may include a liquid crystal display panel (liquid crystal display, LCD), a light-emitting diode (light-emitting diode, LED) display panel, an organic light-emitting semiconductor (organic light-emitting diode, OLED) display panel, or the like. This is not limited in this application.

The middle frame 19 is mainly configured to support the entire device. FIG. 1 shows that the PCB 17 is disposed between the middle frame 19 and the rear cover 21. It should be understood that, in an embodiment, the PCB 17 may alternatively be disposed between the middle frame 19 and the display assembly 15. This is not limited in this application. The printed circuit board PCB 17 may be a flame-resistant material (FR-4) dielectric board, or may be a Rogers (Rogers) dielectric board, or may be a dielectric board mixing Rogers and FR-4, or the like. Herein, FR-4 is a grade designation for a flame-resistant material, and the Rogers dielectric board is a high-frequency board. The PCB 17 carries an electronic element, for example, a radio frequency chip. In an embodiment, a metal layer may be disposed on the printed circuit board PCB 17. The metal layer may be configured to ground the electronic element carried on the printed circuit board PCB 17, or may be configured to ground another element, for example, a bracketed antenna or a frame antenna. The metal layer may be referred to as a ground (ground), a ground plate, or a ground plane. In an embodiment, the metal layer may be formed by etching metal on a surface of any dielectric plate in the PCB 17. In an embodiment, the metal layer used for grounding may be disposed on a side that is of the printed circuit board PCB 17 and that is close to the middle frame 19. In an embodiment, an edge of the printed circuit board PCB 17 may be considered as an edge of a ground layer of the printed circuit board PCB. In an embodiment, the metal middle frame 19 may also be configured to ground the foregoing element. The electronic device 10 may further have another floor/ground plate/ground layer, as described above, and details are not described herein again.

The electronic device 10 may alternatively include a battery (not shown in the figure). The battery may be disposed between the middle frame 19 and the rear cover 21, or may be disposed between the middle frame 19 and the display assembly 15. This is not limited in this application. In some embodiments, the PCB 17 is divided into a mainboard and a daughter board. The battery may be disposed between the mainboard and the daughter board. The mainboard may be disposed between the middle frame 19 and an upper edge of the battery, and the daughter board may be disposed between the middle frame 19 and a lower edge of the battery.

The middle frame 10 may include a side frame 11, and the side frame 11 may be made of a conductive material like metal. The side frame 11 may be disposed between the display assembly 15 and the rear cover 21 and extend around a periphery of the electronic device 10. The side frame 11 may have four sides surrounding the display assembly 15, to help fasten the display assembly 15. In an implementation, the side frame 11 made of the metal material may be directly used as a metal side frame of the electronic device 10 to form a metal frame appearance. This is applicable to metal industrial design (industrial design, ID). In another implementation, an outer surface of the side frame 11 may alternatively be a non-metal material, for example, a plastic side frame, to form a non-metal side frame appearance. This is applicable to non-metal ID.

The middle frame 19 may include a side frame 11, and the middle frame 19 including the side frame 11 is used as an integrated component, and may support an electronic element in the entire device. The cover plate 13 and the rear cover 21 respectively fit upper edges and lower edges of the side frame, so as to enclose a casing or a housing (housing) of the electronic device. In an embodiment, the cover 13, the rear cover 21, the side frame 11, and/or the middle frame 19 may be collectively referred to as a casing or a housing of the electronic device 10. It should be understood that the "casing or housing" may be used to refer to a part or all of any one of the cover 13, the rear cover 21, the side frame 11, or the middle frame 19, or refer to a part or all of any combination of the cover 13, the rear cover 21, the side frame 11, or the middle frame 19.

The rear cover 21 may be a rear cover made of a metal material, or may be a rear cover made of a non-conductive material, like a glass rear cover, a plastic rear cover, or another non-metal rear cover.

FIG. 1 shows only an example of some components included in the electronic device 10. Actual shapes, actual sizes, and actual construction of these components are not limited in FIG. 1.

It should be understood that, in this embodiment of this application, it may be considered that a surface on which the display of the electronic device is located is a front surface, a surface on which the rear cover is located is a rear surface, and a surface on which the side frame is located is a side surface.

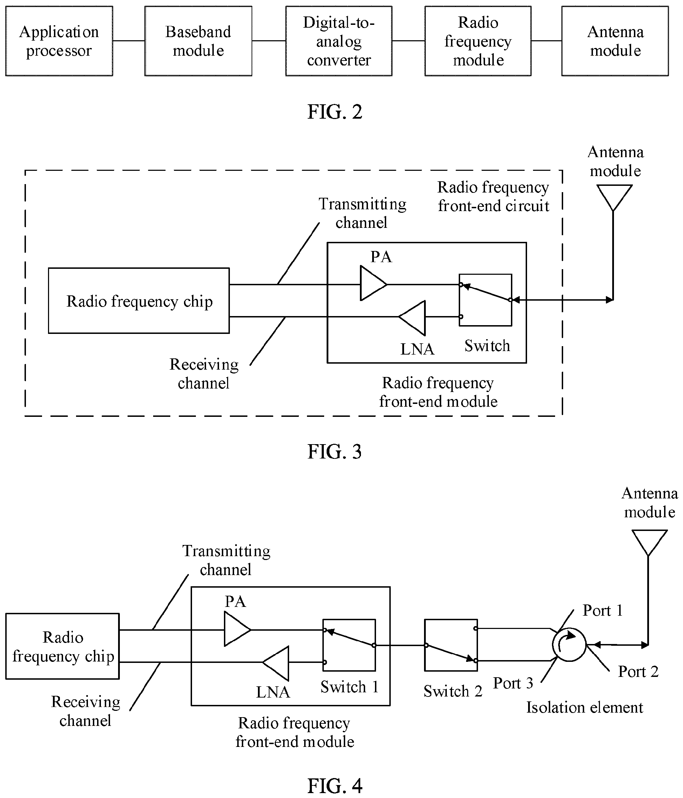

FIG. 2 is a schematic diagram of an internal circuit of an electronic device according to an embodiment of this application.

As shown in FIG. 2, the electronic device may include an application processor (application processor, AP), a baseband module, a digital-to-analog converter, a radio frequency module, and an antenna module.

The application processor may be configured to run an open operating system and various applications on the operating system, and is responsible for controlling the entire system. In a process of transmitting a signal to the outside, the application processor may transmit a digital signal, for example, a voice signal, to the baseband module.

The baseband module may be configured to encode and modulate a received digital signal. For example, in a process of transmitting an electrical signal to the outside, the baseband module encodes and modulates the electrical signal, so that space occupied by information in the digital signal is smaller, interference and attenuation in a channel can be resisted, and link performance can be improved.

The digital-to-analog converter may be configured to convert a digital signal output by the baseband module into an analog signal, so that the radio frequency module performs processing. Alternatively, an analog signal output by the radio frequency module may be converted into a digital signal, so that the baseband module performs processing.

The radio frequency module may be configured to modulate a frequency of a received electrical signal, and amplify power. For example, in a process of transmitting an electrical signal to the outside, the radio frequency module modulates the electrical signal, modulates an analog signal from a low frequency to a specified high-frequency band, to become a radio frequency signal that can be transmitted in the air, and amplifies power of the radio frequency signal, so that the radio frequency signal meets a communication requirement.

The antenna module may be configured to transmit, externally, a radio frequency signal processed by the radio frequency module, or receive an external electromagnetic wave signal and transmit the electromagnetic wave signal to the radio frequency module.

FIG. 3 is a schematic diagram of a radio frequency front-end circuit according to an embodiment of this application. The radio frequency front-end circuit may be a part that is in the radio frequency module shown in FIG. 2 and that is close to the antenna module.

As shown in FIG. 3, the radio frequency front-end circuit may include a radio frequency chip (RF IC) and a radio frequency front-end module (front-end module, FEM).

The radio frequency chip may be configured to modulate and demodulate a radio frequency signal, and may perform up-conversion (increase a frequency of the radio frequency signal) and down-conversion (reduce a frequency of the radio frequency signal) on the radio frequency signal. The radio frequency front-end module may include a PA, a low noise amplifier (low noise amplifier, LNA), and a switch. The PA, the LNA, and the switch are integrated into the radio frequency front-end module. This reduces an area occupied by the PA, the LNA, and the switch, and improves circuit integration. That closed beta testing is separately performed on the PA, the LNA, and the switch changes into that the PA, the LNA, and the switch are integrated into a same module to perform closed beta testing. That is, three times of closed beta testing changes into single closed beta testing. This effectively reduces costs of closed beta testing.

The PA may be disposed on a transmitting channel, and is configured to amplify power of a transmitted radio frequency signal. The LNA may be disposed on a receiving channel, and is configured to amplify power of a radio frequency signal received by the antenna module. The switch may be configured to switch, in different timeslots, a radio frequency channel (the transmitting channel or the receiving channel) connected to the antenna module.

In a communication system shown in FIG. 3, the radio frequency front-end circuit may work through time division duplex (time division duplex, TDD) by using different electrical connection states of the switch (switching the antenna module to be electrically connected to the transmitting channel or the receiving channel). For example, in a timeslot corresponding to a transmitting signal, the switch is switched to the transmitting channel, so that the transmitting channel is electrically connected to the antenna module, and the radio frequency signal is transmitted to the antenna module through the transmitting channel, and is radiated to the outside. Alternatively, in a timeslot corresponding to the receiving signal, the switch is switched to the receiving channel, so that the receiving channel is electrically connected to the antenna module, and the radio frequency signal received by the antenna module is transmitted to the radio frequency chip through the receive channel for processing.

In the transmitting channel of the radio frequency front-end circuit, the PA is configured to amplify power of a radio frequency signal, so that the radio frequency signal meets a communication requirement. A Doherty (Doherty) PA has advantages such as low power consumption, high efficiency, and good linearity, and is used in the radio frequency module. However, since the PA achieves high-efficiency amplification through active load pulling, it is sensitive to loads, and an isolation element needs to be disposed between the PA and the antenna module, to prevent an output load (for example, a match circuit in the antenna module) of the PA from affecting PA performance. The isolation element is mostly a magnetic material, the PA is a semiconductor material, and therefore the two cannot be integrated into a same package.

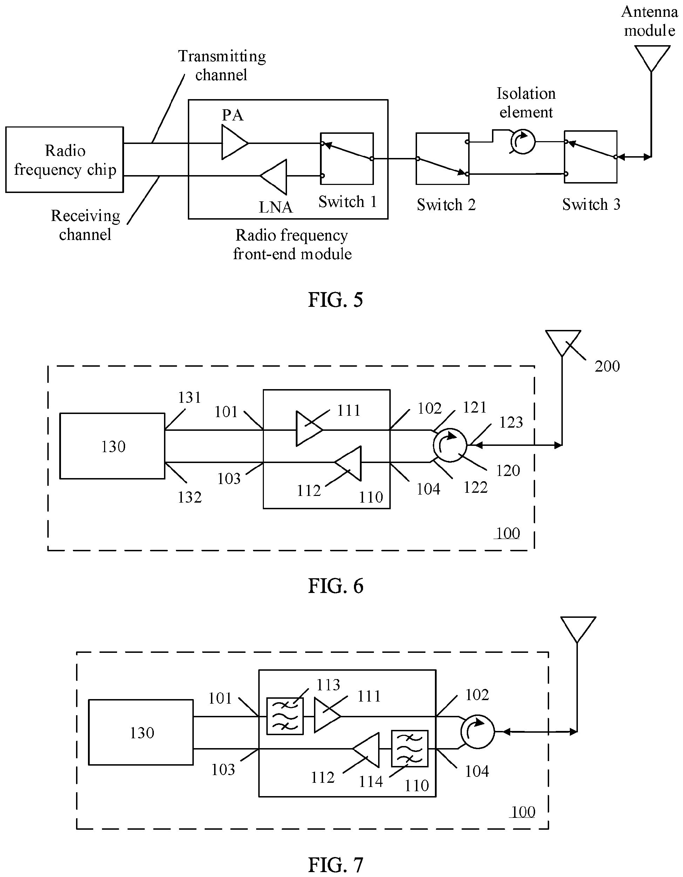

FIG. 4 and FIG. 5 are schematic diagrams of another radio frequency front-end circuit according to embodiments of this application.

As shown in FIG. 4, based on the radio frequency front-end circuit shown in FIG. 3, an isolation element may be added between the radio frequency front-end module and the antenna module. For example, a plurality of ports of the isolation element are sequentially conducted clockwise (a port 1 is unidirectionally conducted to a port 2, the port 2 is unidirectionally conducted to a port 3, and the port 3 is unidirectionally conducted to the port 1).

In the radio frequency front-end circuit shown in FIG. 4, the PA is isolated from the antenna module by using a unidirectional conduction characteristic of the isolation element, and is not affected by a load in the antenna module. In addition, in the layout of the radio frequency front-end circuit, because the antenna module is electrically connected to a common port of a switch 1, the transmitting channel and the receiving channel in the radio frequency front-end module are switched by the switch 1, so that the transmitting channel and the receiving channel are electrically connected to the antenna module in different timeslots. However, due to the unidirectional conduction characteristic of the isolation element, the switch 1 has only one common port, and needs to be electrically connected to the port 1 and the port 3 of the isolation element in different timeslots. Therefore, a switch 2 needs to be disposed between the radio frequency front-end module and the isolation element, so that the common port of the switch 1 may be electrically connected to the port 1 and the port 3 of the isolation element in different timeslots. Therefore, the radio frequency front-end circuit may work in a TDD communication system.

Therefore, in the radio frequency front-end circuit shown in FIG. 4, because the switch 2 is additionally disposed, in comparison with the radio frequency front-end circuit shown in FIG. 3, an insertion loss (insertion loss) of 1 dB to 2 dB is additionally increased, which deteriorates performance of the radio frequency front-end circuit. In addition, because the switch 2 is added, a layout area of the radio frequency front-end circuit is excessively large, which is not conducive to miniaturization.

As shown in FIG. 5, a switch 3 may be added on the basis of the radio frequency front-end circuit shown in FIG. 4, so that the isolation element is connected in series to the transmitting channel. However, because the switch 3 is additionally added, an insertion loss of the radio frequency front-end circuit is further increased, performance of the radio frequency front-end circuit is further deteriorated, and the layout area is larger.

Embodiments of this application provide a radio frequency front-end circuit and an electronic device. An isolation element is added to the radio frequency front-end circuit, so that a PA is not affected by an output load, and good working performance of the PA is maintained. In addition, a quantity of switches is not additionally increased, so that an additional insertion loss is avoided, and performance of the radio frequency front-end circuit is not deteriorated due to adding of an isolation element.

FIG. 6 is a schematic diagram of a radio frequency front-end circuit 100 according to an embodiment of this application.

As shown in FIG. 6, the radio frequency front-end circuit 100 may include a radio frequency front-end module 110 and an isolation element 120.

The radio frequency front-end module 110 may include a PA 111 and an LNA 112. One end of the PA 111 is electrically connected to a first integrated port 101 of the radio frequency front-end module 110, and the other end is electrically connected to a second integrated port 102 of the radio frequency front-end module 110. The PA 111 is connected in series between the first integrated port 101 and the second integrated port 102. One end of the LNA 112 is electrically connected to a third integrated port 103 of the radio frequency front-end module 110, and the other end is electrically connected to a fourth integrated port 104 of the radio frequency front-end module 110. The LNA 112 is connected in series between the third integrated port 103 and the fourth integrated port 104. A first port 121 of the isolation element 120 is electrically connected to the second integrated port 102, a second port 122 of the isolation element 120 is electrically connected to the fourth integrated port 104, and a third port 123 of the isolation element 120 is configured to be electrically connected to an antenna module 200. The first port 121 of the isolation element 120 is unidirectionally conducted to the third port 123 of the isolation element, and the third port 123 of the isolation element 120 is unidirectionally conducted to the second port 122 of the isolation element.

In the embodiment shown in FIG. 6, an isolation element is added to the radio frequency front-end circuit, and a unidirectional conduction characteristic of the isolation element is used, so that an output load of the PA 111 is not affected by a back-end circuit (for example, a match circuit in the antenna module or another load between the isolation element and the antenna module), and the output load (load impedance of an output port of the PA 111, for example, impedance, capacitive reactance, or inductive reactance) of the PA 111 remains unchanged, thereby having good working performance. In addition, a quantity of switches is not additionally increased, and the radio frequency front-end circuit does not introduce an additional insertion loss due to adding of an isolation element, so that performance of the radio frequency front-end circuit is not deteriorated. Further more, because the PA 111 and the LNA 112 are integrated into the radio frequency front-end module 110, an area occupied by the layout of the PA 111 and the LNA 112 is reduced, and integration of the radio frequency front-end module 110 is improved.

In a process of sending a signal by an electronic device, the first integrated port 101 of the radio frequency front-end module 110 receives a first radio frequency signal, and power of the first radio frequency signal is amplified after the first radio frequency signal passes through the PA 111. The first radio frequency signal is transmitted to the first port 121 of the isolation element through the second integrated port 102. Because the first port 121 of the isolation element 120 is unidirectionally conducted, the first radio frequency signal is transmitted to the antenna module 200 through the third port 123 of the isolation element 120, and is radiated by the antenna module 200 to the outside.

In a process of receiving a signal by the electronic device, the antenna module 200 receives a radiated electromagnetic wave, converts the electromagnetic wave into a second radio frequency signal, and transmits the second radio frequency signal to the third port 123 of the isolation element. Because the third port 123 of the isolation element 120 is unidirectionally conducted, the second radio frequency signal is transmitted to the fourth integrated port 104 of the radio frequency front-end module 110 through the second port 122 of the isolation element 120. After the second radio frequency signal passes through the LNA 112, power of the second radio frequency signal is amplified, and the second radio frequency signal is transmitted to another part of the radio frequency module through the third integrated port 103 for processing.

It should be understood that "unidirectionally conducted" in the foregoing embodiment may be understood as that there is basically no insertion loss or an insertion loss is very low (for example, less than 0.5 dB) when an electrical signal is transmitted in a forward direction, and a large insertion loss (for example, more than 10 dB, and power attenuation of the electrical signal is more than 90%) is generated when the electrical signal is transmitted in a reverse direction. For example, that the first port 121 of the isolation element 120 is unidirectionally conducted to the third port 123 of the isolation element may be understood as that when an electrical signal is input from the first port 121, the electrical signal is normally transmitted to the third port 123. In the following embodiment, "unidirectionally conducted" may also be correspondingly understood. However, because the first port 121 of the isolation element 120 is unidirectionally conducted to the third port 123 of the isolation element, when an electrical signal is input from the third port 123, the electrical signal is reversely transmitted to the first port 121, and power of the electrical signal obtained by the first port 121 is greatly attenuated due to an insertion loss generated by reverse transmission in the isolation element 120.

In an embodiment, the radio frequency front-end circuit 100 may further include a radio frequency chip 130. The radio frequency chip 130 includes a transmitting port 131 and a receiving port 132. The transmitting port 131 is electrically connected to the first integrated port 101, and the receiving port 132 is electrically connected to the third integrated port 103. In a process of transmitting the first radio frequency signal, the radio frequency chip 130 may be configured to modulate a frequency of the first radio frequency signal, and perform up-conversion on the first radio frequency signal, to increase the frequency of the first radio frequency signal to a frequency required for communication. In a process of receiving the second radio frequency signal, the radio frequency chip 130 may be configured to demodulate a frequency of the second radio frequency signal, perform down-conversion on the second radio frequency signal, and reduce the frequency of the second radio frequency signal to a frequency required by a remaining part of the radio frequency module for processing.

In an embodiment, the radio frequency chip 130 may be a modem (modem).

In an embodiment, the isolation element 120 may be a circulator, or may be another isolation element whose quantity of ports is greater than or equal to 3. This is not limited in this application.

In an embodiment, the front-end module 110 further includes a first filter 113, as shown in FIG. 7. The first filter 113 is connected in series between the first integrated port 101 and the PA 111. The first filter 113 may be configured to filter out out-of-band spurious emission of the first radio frequency signal that is input to the PA 111, to improve working efficiency of the PA 111.

In an embodiment, the front-end module 110 further includes a second filter 114, as shown in FIG. 7. The second filter 114 is connected in series between the LNA 112 and the fourth integrated port 104. The second filter 114 may be configured to filter out out-of-band spurious emission of the second radio frequency signal received by the antenna module, to improve working efficiency of the LNA 112.

In addition, the first filter 113 and the second filter 114 are integrated into the front-end module 110, to reduce an area occupied by the layout of the first filter 113 and the second filter 114, thereby improving integration of the radio frequency front-end module 110.

It should be understood that, according to the technical solutions in embodiments of this application, a quantity of and locations of filters may be adjusted based on an actual design requirement. This is not limited in this application. For example, the radio frequency front-end circuit may include only one filter, and the filter may be connected in series between the LNA 112 and the third integrated port 103. The radio frequency front-end module 110 may also include another electronic element, to further improve integration of the radio frequency front-end module 110. This is not limited in this application.

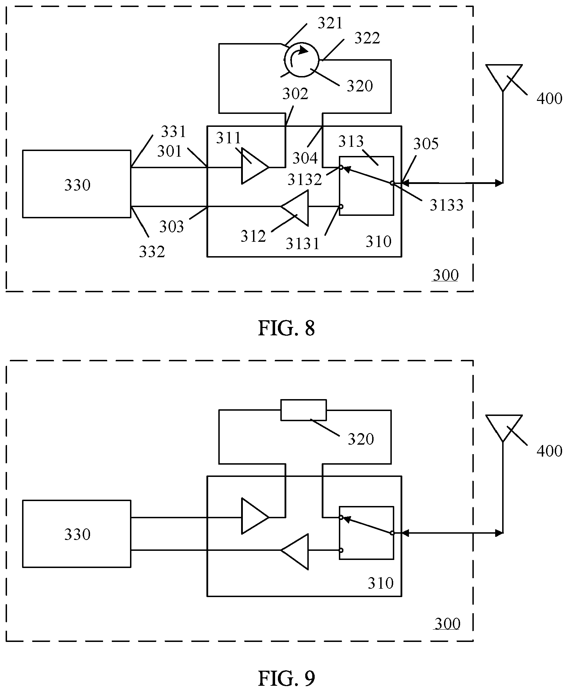

FIG. 8 is a schematic diagram of a radio frequency front-end circuit 300 according to an embodiment of this application.

As shown in FIG. 8, the radio frequency front-end circuit 300 may include a radio frequency front-end module 310 and an isolation element 320.

The radio frequency front-end module 310 may include a PA 311, an LNA 312, and a switch 313. One end of the PA 311 is electrically connected to a first integrated port 301 of the radio frequency front-end module 310, and the other end is electrically connected to a second integrated port 302 of the radio frequency front-end module 310. The PA 311 is connected in series between the first integrated port 301 and the second integrated port 302. One end of the LNA 312 is electrically connected to a third integrated port 303 of the radio frequency front-end module 310, and the other end is electrically connected to a first port 3131 of the switch 313. The LNA 312 is connected in series between a third integrated port 303 and the first port 3131 of the switch 313. A second port 3132 of the switch 313 is electrically connected to a fourth integrated port 304 of the radio frequency integrated module 310. A common port 3133 of the switch 313 is electrically connected to a fifth integrated port 305 of the radio frequency front-end module 310, and the fifth integrated port 305 is configured to be electrically connected to an antenna module 400. The switch 313 may be configured to switch the common port 3133 to be electrically connected to the first port 3131 or the second port 3132. A first port 321 of the isolation element 320 is electrically connected to the second integrated port 302, and a second port 322 of the isolation element 320 is electrically connected to the fourth integrated port 304. The first port 321 of the isolation element 320 is unidirectionally conducted to the second port 322 of the isolation element 320.

In the embodiment shown in FIG. 8, an isolation element is added between the switch 313 and the PA 311, and a unidirectional conduction characteristic of the isolation element is used, so that an output load of the PA 311 is not affected by a back-end circuit (for example, a match circuit in the antenna module or another load between the isolation element and the antenna module), and the output load of the PA 311 remains unchanged, thereby having good working performance. In addition, in comparison with the radio frequency front-end circuit shown in FIG. 4 (or FIG. 5), a quantity of switches is not additionally increased, so that an additional insertion loss is avoided, and performance of the radio frequency front-end circuit is not deteriorated due to adding of an isolation element. In addition, because the PA 311, the LNA 312, and the switch 313 are integrated into the radio frequency front-end module 310, an area occupied by the layout of the PA 311, the LNA 312, and the switch 313 is reduced, and a quantity of times of closed beta testing of an electronic element is reduced. This effectively reduces costs.

In a process of sending a signal by an electronic device, the first integrated port 301 of the radio frequency front-end module 310 receives a first radio frequency signal, and power of the first radio frequency signal is amplified after the first radio frequency signal passes through the PA 311. The first radio frequency signal is transmitted to the first port 321 of the isolation element through the second integrated port 302. Because the first port 321 of the isolation element 320 is unidirectionally conducted, the first radio frequency signal is transmitted to the fourth integrated port 304 through the second port 322 of the isolation element 320. In a timeslot corresponding to sending the signal, the common port 3133 of the switch 313 is electrically connected to the second port 3132 of the switch 313, and the first radio frequency signal is transmitted to the fifth integrated port 305 by using the switch 313. The fifth integrated port 305 transmits the first radio frequency signal to the antenna module 400, and the antenna module 400 radiates the first radio frequency signal to the outside.

In a process of receiving a signal by the electronic device, the antenna module 400 receives a radiated electromagnetic wave, converts the electromagnetic wave into a second radio frequency signal, and transmits the second radio frequency signal to the fifth integrated port 305 of the radio frequency front-end module 310. In a timeslot corresponding to receiving the signal, the common port 3133 of the switch 313 is electrically connected to the first port 3131 of the switch 313, and the second radio frequency signal is transmitted to the LNA 312 by using the switch 313. After the second radio frequency signal passes through the LNA 312, power of the second radio frequency signal is amplified, and the second radio frequency signal is transmitted to another part of the radio frequency module through the third integrated port 303 for processing.

It should be understood that, because the isolation element 320 is disposed on a transmitting channel (between the PA 311 and the switch 313) of the radio frequency front-end circuit 300, and the isolation element 320 is not connected to a receiving channel, the receiving channel is not affected by the isolation element 320 (for example, the second radio frequency signal received by the receiving channel does not generate an insertion loss because the second radio frequency signal passes through the isolation element 320).

In an embodiment, the radio frequency front-end circuit 300 may further include a radio frequency chip 330. The radio frequency chip 330 includes a transmitting port 331 and a receiving port 332. The transmitting port 331 is electrically connected to the first integrated port 301, and the receiving port 332 is electrically connected to the third integrated port 303. In a process of transmitting the first radio frequency signal, the radio frequency chip 330 may be configured to modulate a frequency of the first radio frequency signal, and perform up-conversion on the first radio frequency signal, to increase the frequency of the first radio frequency signal to a frequency required for communication. In a process of receiving the second radio frequency signal, the radio frequency chip 330 may be configured to demodulate a frequency of the second radio frequency signal, perform down-conversion on the second radio frequency signal, and reduce the frequency of the second radio frequency signal to a frequency required by a remaining part of the radio frequency module for processing.

In an embodiment, the radio frequency chip 330 may be a modem.

In an embodiment, the isolation element 320 may be a circulator or an isolator. The isolator and the circulator may separately be used as the isolation element. A difference lies in that the isolator is an isolation element including two ports, as shown in FIG. 9. The circulator is an isolation element including three ports, as shown in FIG. 8. Only two of the ports may be used in the radio frequency front-end circuit 300 in FIG. 8. Alternatively, the isolation element 320 may be another isolation element whose quantity of ports is greater than or equal to 2. This is not limited in this application.

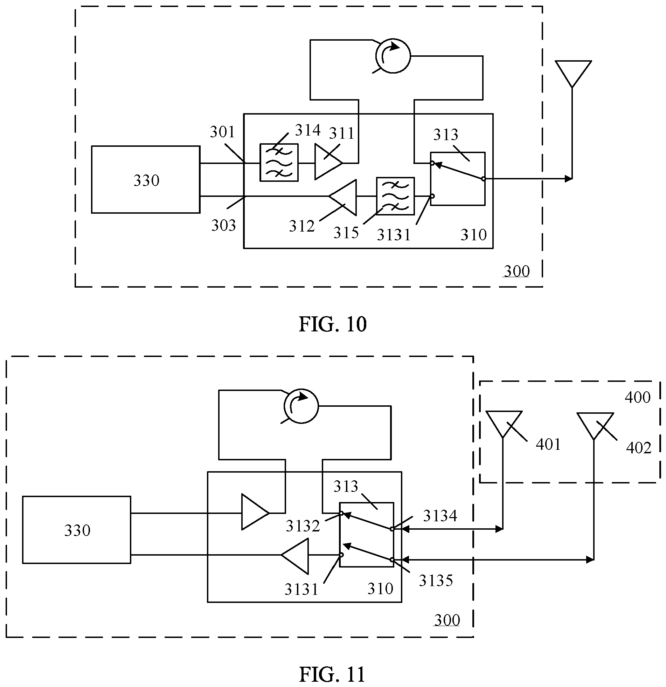

In an embodiment, the front-end module 310 further includes a first filter 314, as shown in FIG. 10. The first filter 314 is connected in series between the first integrated port 301 and the PA 311. The first filter 314 may be configured to filter out out-of-band spurious emission of the first radio frequency signal that is input to the PA 311, to improve working efficiency of the PA 311.

In an embodiment, the front-end module 310 further includes a second first filter 315, as shown in FIG. 10. The second filter 315 is connected in series between the LNA 312 and the first port 3131 of the switch 313, and the second filter 315 may be configured to filter out out-of-band spurious emission of the second radio frequency signal received by the antenna module, so as to improve working efficiency of the LNA 312.

In addition, the first filter 314 and the second filter 315 are integrated into the front-end module 310, to reduce an area occupied by the layout of the first filter 314 and the second filter 315, thereby improving integration of the radio frequency front-end module 310.

It should be understood that, according to the technical solutions in embodiments of this application, a quantity of and locations of filters may be adjusted based on an actual design requirement. This is not limited in this application. For example, the radio frequency front-end circuit may include only one filter, and may be connected in series between the LNA 312 and the third integrated port 303. The radio frequency front-end module 310 may also include another electronic element, to further improve integration of the radio frequency front-end module 310. This is not limited in this application.

In the foregoing embodiment, only an example in which the switch 313 is a single pole double throw (single pole double throw, SPDT) switch is used for description. In practice, the switch 313 may alternatively be a single pole x throw (single pole x throw, SPXT) switch, the switch 313 includes a common port and X input ports (X>2), and two of the X input ports may be used as the first port 3131 and the second port 3132 in the foregoing embodiment. Alternatively, the switch 313 may be a double pole double throw (double pole double throw, DPDT) switch, a double pole x throw (double pole x throw, DPXT) switch, or an x pole x throw (x pole x throw, XPXT) switch, or may be used in the foregoing embodiment.

In an embodiment, the switch 313 may include two or more common ports. For example, the switch 313 may be a double pole double throw switch, a double pole x throw switch, or an x pole x throw switch, and each switch 313 may have two or more common ports.

In an embodiment, the switch 313 may include a first common port 3134 and a second common port 3135, as shown in FIG. 11. The first common port 3134 is electrically connected to a first antenna element 401 in the antenna module 400, and the second common port 3135 is configured to electrically connect to a second antenna element 402 in the antenna module 400. The switch 313 may perform antenna element switching based on different environments (for example, a hand holding posture of a user or a location of a user relative to an antenna element), and select an antenna element with better performance to send and receive signals. For example, when the user holds the first antenna element 401, and radiation performance of the first antenna element 401 is poor, the second antenna element 402 may be selected to send and receive signals. In this case, the second common port 3135 is electrically connected to the second port 3132 and the first port 3131 separately in a timeslot corresponding to a transmitting signal and a timeslot corresponding to a receiving signal.

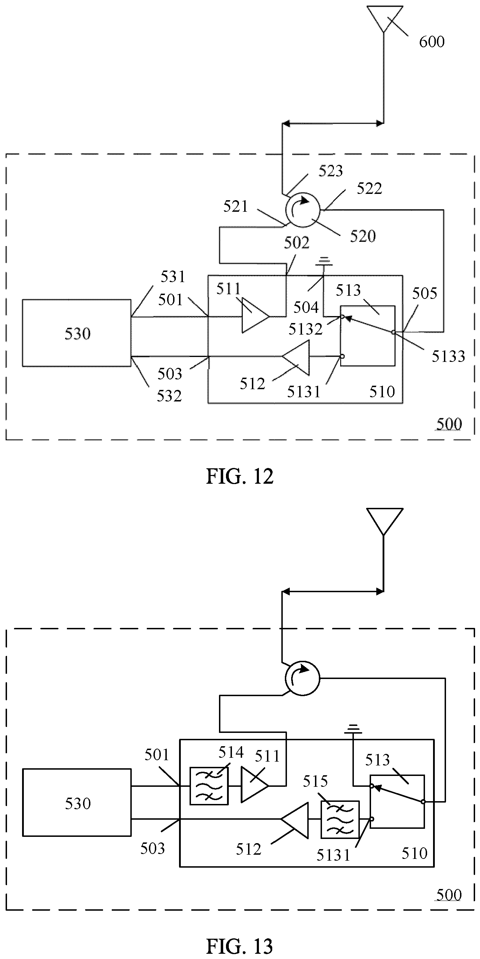

FIG. 12 is a schematic diagram of a radio frequency front-end circuit 500 according to an embodiment of this application.

As shown in FIG. 12, the radio frequency front-end circuit 500 may include a radio frequency front-end module 510 and an isolation element 520.

The radio frequency front-end module 510 may include a PA 511, an LNA 512, and a switch 513. One end of the PA 511 is electrically connected to a first integrated port 501 of the radio frequency front-end module 510, and the other end is electrically connected to a second integrated port 502 of the radio frequency front-end module 510. The PA 511 is connected in series between the first integrated port 501 and the second integrated port 502. One end of the LNA 512 is electrically connected to a third integrated port 503 of the radio frequency front-end module 510, and the other end is electrically connected to a first port 5131 of the switch 513. The LNA 512 is connected in series between the third integrated port 503 and the first port 5131 of the switch 513. A second port 5132 of the switch 313 is electrically connected to a fourth integrated port 504 of the radio frequency integrated module 510, and the fourth integrated port 504 is grounded. A common port 5133 of the switch 513 is electrically connected to a fifth integrated port 505 of the radio frequency front-end module 510. The switch 513 may be configured to switch the common port 5133 to be electrically connected to the first port 5131 or the second port 5132. A first port 521 of the isolation element 520 is electrically connected to the second integrated port 502, and a second port 522 of the isolation element 520 is electrically connected to the fifth integrated port 505. A third port 523 of the isolation element 520 is configured to be electrically connected to an antenna module 600. The first port 521 of the isolation element 520 is unidirectionally conducted to the third port 523 of the isolation element 520. The third port 523 of the isolation element 520 is unidirectionally conducted to the second port 522 of the isolation element 520.

It should be understood that, that the fourth integrated port 504 is grounded may be understood as that the radio frequency front-end module 510 is electrically connected to the ground of an electronic device on the fourth integrated port 504, and the ground may be a metal layer in the electronic device, for example, a metal layer in a PCB.

In the embodiment shown in FIG. 12, an isolation element is added between the radio frequency front-end module 510 and the antenna module 600, and a unidirectional conduction feature of the isolation element is used, so that an output load of the PA 511 is not affected by a back-end circuit (for example, a match circuit in the antenna module or another load between the isolation element and the antenna module), and the output load of the PA 511 remains unchanged, thereby having good working performance. In addition, in comparison with the radio frequency front-end circuit shown in FIG. 4 (or FIG. 5), a quantity of switches is not additionally increased, so that an additional insertion loss is avoided, and performance of the radio frequency front-end circuit is not deteriorated due to adding of an isolation element. In addition, because the PA 511, the LNA 512, and the switch 513 are integrated into the radio frequency front-end module 510, an area occupied by the layout of the PA 511, the LNA 512, and the switch 513 is reduced, and a quantity of times of closed beta testing of an electronic element is reduced. This effectively reduces costs.

In a process of sending a signal by the electronic device, the first integrated port 501 of the radio frequency front-end module 510 receives a first radio frequency signal, and power of the first radio frequency signal is amplified after the first radio frequency signal passes through the PA 511. The first radio frequency signal is transmitted to the first port 521 of the isolation element through the second integrated port 502. Because the first port 521 of the isolation element 520 is unidirectionally conducted, the first radio frequency signal is transmitted to the antenna module 600 through the third port 523 of the isolation element 520, and is radiated by the antenna module 600 to the outside.

In a process of receiving a signal by the electronic device, the antenna module 600 receives a radiated electromagnetic wave, converts the electromagnetic wave into a second radio frequency signal, and transmits the second radio frequency signal to the third port 523 of the isolation element 520. Because the third port 523 of the isolation element 520 is unidirectionally conducted, the second radio frequency signal is transmitted to the fifth integrated port 505 of the radio frequency front-end module 510 through the second port 522 of the isolation element 520. In a timeslot corresponding to receiving the signal, the common port 5133 of the switch 513 is electrically connected to the first port 5131 of the switch 513, and the second radio frequency signal is transmitted to the LNA 512 by using the switch 513. After the second radio frequency signal passes through the LNA 512, power of the second radio frequency signal is amplified, and the second radio frequency signal is transmitted to another part of the radio frequency module through the third integrated port 503 for processing.

In an embodiment, the fourth integrated port 504 may be grounded by using an electronic element. For example, the fourth integrated port may be grounded by using a 50 ohm resistor.

In an embodiment, the radio frequency front-end circuit 500 may further include a radio frequency chip 530. The radio frequency chip 530 includes a transmitting port 531 and a receiving port 532. The transmitting port 531 is electrically connected to the first integrated port 501, and the receiving port 532 is electrically connected to the third integrated port 503. In a process of transmitting the first radio frequency signal, the radio frequency chip 530 may be configured to modulate a frequency of the first radio frequency signal, and perform up-conversion on the first radio frequency signal, to increase the frequency of the first radio frequency signal to a frequency required for communication. In a process of receiving the second radio frequency signal, the radio frequency chip 530 may be configured to demodulate a frequency of the second radio frequency signal, perform down-conversion on the second radio frequency signal, and reduce the frequency of the second radio frequency signal to a frequency required by a remaining part of the radio frequency module for processing.

In an embodiment, the radio frequency chip 530 may be a modem.

In an embodiment, the isolation element 520 may be a circulator, or may be another isolation element whose quantity of ports is greater than or equal to 3. This is not limited in this application.

In an embodiment, in a process of sending a signal by the electronic device, the common port 5133 of the switch 513 is electrically connected to the second port 5132 of the switch 513, so as to avoid that a high-power radio frequency signal transmitted by a transmitting channel enters a receiving channel due to reverse transmission in the isolation element 520, which affects performance of the LNA 5131 in the receiving channel. This reduces a requirement of the receiving channel on tolerance when the transmitting channel transmits a high-power signal. For example, in a timeslot corresponding to sending the signal, when the first integrated port 501 of the radio frequency front-end module 510 receives the first radio frequency signal, the first radio frequency signal is transmitted to the antenna module 600 through the third port 503 of the isolator 520. Because the first port 521 of the isolation element 520 is unidirectionally conducted to the third port 523 of the isolation element 520, and the third port 523 of the isolation element 520 is unidirectionally conducted to the second port 522 of the isolation element 520, a large insertion loss occurs during reverse transmission of a radio frequency signal. However, in a process of transmitting the first radio frequency signal to the third port 523 of the isolation element 520 through the first port 521 of the isolation element 520, a part of the first radio frequency signal still arrives at the second port 522 of the isolation element 520. Generally, power of the transmitted first radio frequency signal is dozens of dB, and power of the received second radio frequency signal is minus dozens of dB. Although the radio frequency signal has a large insertion loss during reverse transmission of the isolation element, for example, 10 dB (power of the radio frequency signal attenuating by 90%), for the LNA 512, power of the first radio frequency signal arriving at the second port 522 is still high, and the LNA 512 is damaged. Therefore, in the timeslot corresponding to sending the signal, the common port 5133 of the switch 513 is electrically connected to the second port 5132 of the switch 513, and the first radio frequency signal arriving at the second port 522 is led to the ground, thereby avoiding damage to the LNA 512.

In an embodiment, the front-end module 510 further includes a first filter 514, as shown in FIG. 13. The first filter 514 is connected in series between the first integrated port 501 and the PA 511. The first filter 514 may be configured to filter out out-of-band spurious emission of the first radio frequency signal that is input to the PA 511, to improve working efficiency of the PA 511.

In an embodiment, the front-end module 510 further includes a second first filter 515, as shown in FIG. 13. The second filter 515 is connected in series between the LNA 512 and the first port 5131 of the switch 513, and the second filter 515 may be configured to filter out out-of-band spurious emission of the second radio frequency signal received by the antenna module, so as to improve working efficiency of the LNA 312.

In addition, the first filter 514 and the second filter 515 are integrated into the front-end module 510, to reduce an area occupied by the layout of the first filter 514 and the second filter 515, thereby improving integration of the radio frequency front-end module 510.

It should be understood that, according to the technical solutions in embodiments of this application, a quantity of and locations of filters may be adjusted based on an actual design requirement. This is not limited in this application. For example, the radio frequency front-end circuit may include only one filter, and may be connected in series between the LNA 512 and the third integrated port 503. The radio frequency front-end module 510 may also include another electronic element, to further improve integration of the radio frequency front-end module 510. This is not limited in this application.

In the foregoing embodiment, only an example in which the switch 513 is a single pole double throw switch is used for description. In practice, the switch 513 may alternatively be a single pole x throw switch, the switch 513 includes a common port and X input ports (X>2), and two of the X input ports may be used as the first port 5131 and the second port 5132 in the foregoing embodiment. Alternatively, the switch 513 may be a double pole double throw switch, a double pole x throw switch, or an x pole x throw switch, and may also be used in the foregoing embodiment.

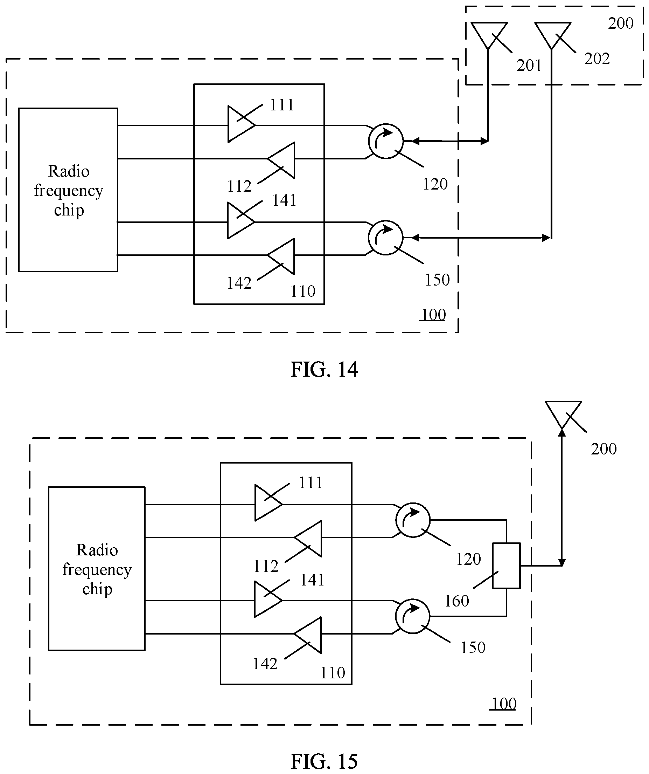

FIG. 14 to FIG. 19 are schematic diagrams of still other radio frequency front-end circuits according to embodiments of this application.

It should be understood that, in the foregoing embodiment, only an example in which the radio frequency front-end circuit includes one transmitting channel (a radio frequency channel on which the PA is located) and one receiving channel (a radio frequency channel on which the LNA is located) is used for description. In practice, the radio frequency front-end circuit may include a plurality of transmitting channels and a plurality of receiving channels. The plurality of transmitting channels (or the plurality of receiving channels) may work at a same frequency, for example, a multi-input multiple-output (multi-input multi-output, MIMO) system, or may work at different frequencies. For brevity of description, only the following embodiments are used as an example for description. A quantity of transmitting channels and a quantity of receiving channels are not limited in this application.

A radio frequency front-end circuit shown in FIG. 14 may correspond to the radio frequency front-end circuit shown in FIG. 6. A difference lies in that the radio frequency front-end circuit shown in FIG. 14 includes two transmitting channels and two receiving channels.

As shown in FIG. 14, the radio frequency front-end circuit 100 may include a radio frequency front-end module 110, a first isolation element 120, and a second isolation element 150.

The radio frequency front-end module 110 may include a first PA 111, a second PA 141, a first LNA 112, and a second LNA 142.

The first PA 111, the first LNA 112, and the first isolation element 120 form a first transmitting channel and a first receiving channel. One end of the first PA 111 is electrically connected to a first integrated port of the radio frequency front-end module 110, and the other end is electrically connected to a second integrated port of the radio frequency front-end module 110. The first PA 111 is connected in series between the first integrated port and the second integrated port. One end of the first LNA 112 is electrically connected to a third integrated port of the radio frequency front-end module 110, and the other end is electrically connected to a fourth integrated port of the radio frequency front-end module 110. The first LNA 112 is connected in series between the third integrated port and the fourth integrated port. A first port of the first isolation element 120 is electrically connected to the second integrated port, a second port of the first isolation element 120 is electrically connected to the fourth integrated port, and a third port of the first isolation element 120 is configured to be electrically connected to an antenna module 200. The first port of the first isolation element 120 is unidirectionally conducted to the third port of the first isolation element 120, and the third port of the first isolation element 120 is unidirectionally conducted to the second port of the first isolation element 120.

The second PA 141, the second LNA 142, and the second isolation element 150 form a second transmitting channel and a second receiving channel. One end of the second PA 141 is electrically connected to a fifth integrated port of the radio frequency front-end module 110, and the other end is electrically connected to a sixth integrated port of the radio frequency front-end module 110. The second PA 141 is connected in series between the fifth integrated port and the sixth integrated port. One end of the second LNA 142 is electrically connected to a seventh integrated port of the radio frequency front-end module 110, and the other end is electrically connected to an eighth integrated port of the radio frequency front-end module 110. The second LNA 142 is connected in series between the seventh integrated port and the eighth integrated port. A first port of the second isolation element 150 is electrically connected to the sixth integrated port, a second port of the second isolation element 150 is electrically connected to the eighth integrated port, and a third port of the second isolation element 150 is configured to be electrically connected to the antenna module 200. The first port of the second isolation element 150 is unidirectionally conducted to the third port of the second isolation element 150, and the third port of the second isolation element 150 is unidirectionally conducted to the second port of the second isolation element 150.

In an embodiment, the third port of the first isolation element 120 and the third port of the second isolation element 150 may be electrically connected to different antenna elements in the antenna module 200. For example, the third port of the first isolation element 120 may be electrically connected to a first antenna element 201, and the third port of the second isolation element 150 may be electrically connected to a second antenna element 202, as shown in FIG. 14.

In an embodiment, the third port of the first isolation element 120 and the third port of the second isolation element 150 may be electrically connected to a same antenna element in the antenna module 200. For example, the radio frequency front-end circuit may further include a combiner 160, the third port of the first isolation element 120 and the third port of the second isolation element 150 may be electrically connected to two input ports of the combiner 160 respectively, and an output port of the combiner 160 may be electrically connected to an antenna element in the antenna module 200, as shown in FIG. 15. The combiner 160 may be configured to combine radio frequency signals output by the plurality of transmitting channels, to avoid mutual interference or mutual cancellation.

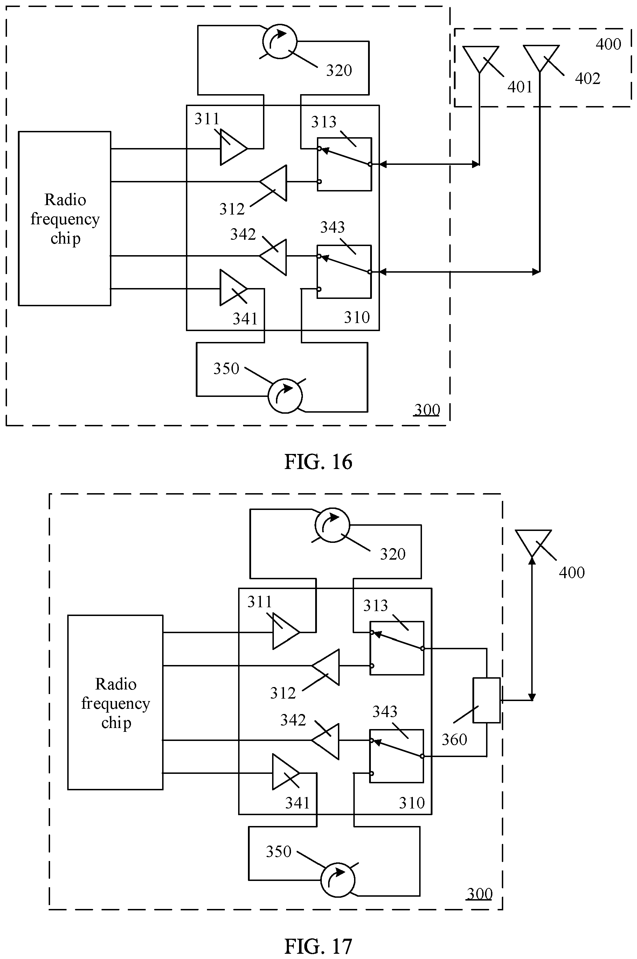

A radio frequency front-end circuit shown in FIG. 16 may correspond to the radio frequency front-end circuit shown in FIG. 8. A difference lies in that the radio frequency front-end circuit shown in FIG. 16 includes two transmitting channels and two receiving channels.

As shown in FIG. 16, the radio frequency front-end circuit 100 may include a radio frequency front-end module 110, a first isolation element 120, and a second isolation element 150.

The radio frequency front-end module 310 may include a first PA311, a second PA 341, a first LNA 312, a second LNA 342, a first switch 313, and a second switch 343.

The first PA 311, the first LNA 312, the first switch 313, and the first isolation element 320 form a first transmitting channel and a first receiving channel. One end of the first PA 311 is electrically connected to a first integrated port of the radio frequency front-end module 310, and the other end is electrically connected to a second integrated port of the radio frequency front-end module 310. The first PA 311 is connected in series between the first integrated port and the second integrated port. One end of the first LNA 312 is electrically connected to a third integrated port of the radio frequency front-end module 310, and the other end is electrically connected to a first port of the first switch 313. The first LNA 312 is connected in series between the third integrated port and the first port of the first switch 313. A second port of the first switch 313 is electrically connected to a fourth integrated port of the radio frequency integrated module 310. A common port of the first switch 313 is electrically connected to a fifth integrated port of the radio frequency front-end module 310, and the fifth integrated port is configured to be electrically connected to an antenna module 400. A first port of the first isolation element 320 is electrically connected to the second integrated port, and a second port of the first isolation element 320 is electrically connected to the fourth integrated port. The first port of the first isolation element 320 is unidirectionally conducted to the second port of the first isolation element 320.

The second PA 341, the second LNA 342, the second switch 343, and the second isolation element 350 form a second transmitting channel and a second receiving channel. One end of the second PA 341 is electrically connected to a sixth integrated port of the radio frequency front-end module 310, and the other end is electrically connected to a seventh integrated port of the radio frequency front-end module 310. The second PA 341 is connected in series between the sixth integrated port and the seventh integrated port. One end of the second LNA 342 is electrically connected to an eighth integrated port of the radio frequency front-end module 310, the other end is electrically connected to a first port of the second switch 343, and the second LNA 342 is connected in series between the eighth integrated port and the first port of the second switch 343. A second port of the second switch 343 is electrically connected to a ninth integrated port of the radio frequency integrated module 310. A common port of the second switch 343 is electrically connected to a tenth integrated port of the radio frequency front-end module 310, and the tenth integrated port is configured to be electrically connected to an antenna module 400. A first port of the second isolation element 350 is electrically connected to the seventh integrated port, and a second port of the second isolation element 350 is electrically connected to the ninth integrated port. The first port of the second isolation element 350 is unidirectionally conducted to the second port of the second isolation element 350.

In an embodiment, the fifth integrated port and the tenth integrated port of the radio frequency front-end module 310 may be electrically connected to different antenna elements in the antenna module 200. For example, the fifth integrated port of the radio frequency front-end module 310 may be electrically connected to a first antenna element 401, and the tenth integrated port of the radio frequency front-end module 310 may be electrically connected to a second antenna element 402, as shown in FIG. 16.

In an embodiment, the fifth integrated port and the tenth integrated port of the radio frequency front-end module 310 may be electrically connected to the same antenna element in the antenna module 400. For example, the radio frequency front-end circuit may further include a combiner 360, the fifth integrated port and the tenth integrated port of the radio frequency front-end module 310 may be electrically connected to two input ports of the combiner 360 respectively, and an output port of the combiner 360 may be electrically connected to an antenna element in the antenna module 400, as shown in FIG. 17. The combiner 360 may be configured to combine radio frequency signals output by the plurality of transmitting channels, to avoid mutual interference or mutual cancellation.

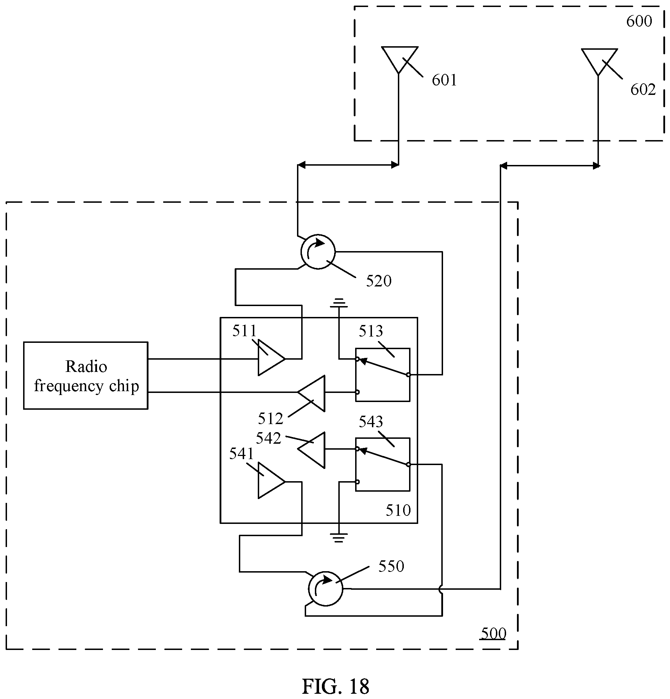

A radio frequency front-end circuit shown in FIG. 18 may correspond to the radio frequency front-end circuit shown in FIG. 12. A difference lies in that the radio frequency front-end circuit shown in FIG. 18 includes two transmitting channels and two receiving channels.

As shown in FIG. 18, the radio frequency front-end circuit 100 may include a radio frequency front-end module 510, a first isolation element 520, and a second isolation element 550.

The radio frequency front-end module 510 may include a first PA 511, a second PA 541, a first LNA 512, a second LNA 542, a first switch 513, and a second switch 543.

The first PA 511, the first LNA 512, the first switch 513, and the first isolation element 520 form a first transmitting channel and a first receiving channel. One end of the first PA 511 is electrically connected to a first integrated port of the radio frequency front-end module 510, and the other end is electrically connected to a second integrated port of the radio frequency front-end module 510. The first PA 511 is connected in series between the first integrated port and the second integrated port. One end of the first LNA 512 is electrically connected to a third integrated port of the radio frequency front-end module 510, and the other end is electrically connected to a first port of the first switch 513. The first LNA 512 is connected in series between the third integrated port and the first port of the first switch 513. A second port of the first switch 313 is electrically connected to a fourth integrated port of the radio frequency integrated module 510, and the fourth integrated port is grounded. A common port of the first switch 513 is electrically connected to a fifth integrated port of the radio frequency front-end module 510. A first port of the first isolation element 520 is electrically connected to the second integrated port, and a second port of the first isolation element 520 is electrically connected to the fifth integrated port. A third port of the first isolation element 520 is configured to be electrically connected to an antenna module 600. The first port of the first isolation element 520 is unidirectionally conducted to the third port of the first isolation element 520. The third port of the first isolation element 520 is unidirectionally conducted to the second port of the first isolation element 520.

The second PA 541, the second LNA 542, the second switch 543, and the second isolation element 550 form a second transmitting channel and a second receiving channel. One end of the second PA 541 is electrically connected to the first integrated port of the radio frequency front-end module 510, and the other end is electrically connected to the second integrated port of the radio frequency front-end module 510. The second PA 541 is connected in series between the first integrated port and the second integrated port. One end of the second LNA 542 is electrically connected to the third integrated port of the radio frequency front-end module 510, the other end is electrically connected to a first port of the second switch 543, and the second LNA 542 is connected in series between the third integrated port and the first port of the second switch 543. A second port of the second switch 543 is electrically connected to the fourth integrated port of the radio frequency integrated module 510, and the fourth integrated port is grounded. A common port of the second switch 543 is electrically connected to the fifth integrated port of the radio frequency front-end module 510. A first port of the second isolation element 550 is electrically connected to the second integrated port, and a second port of the second isolation element 550 is electrically connected to the fifth integrated port. A third port of the second isolation element 550 is configured to be electrically connected to the antenna module 600. The first port of the second isolation element 550 is unidirectionally conducted to the third port of the second isolation element 550. The third port of the second isolation element 550 is unidirectionally conducted to the second port of the second isolation element 550.

In an embodiment, the third port of the first isolation element 520 and the third port of the second isolation element 550 may be electrically connected to different antenna elements in the antenna module 200. For example, the third port of the first isolation element 520 may be electrically connected to a first antenna element 601, and the third port of the second isolation element 550 may be electrically connected to a second antenna element 602, as shown in FIG. 18.

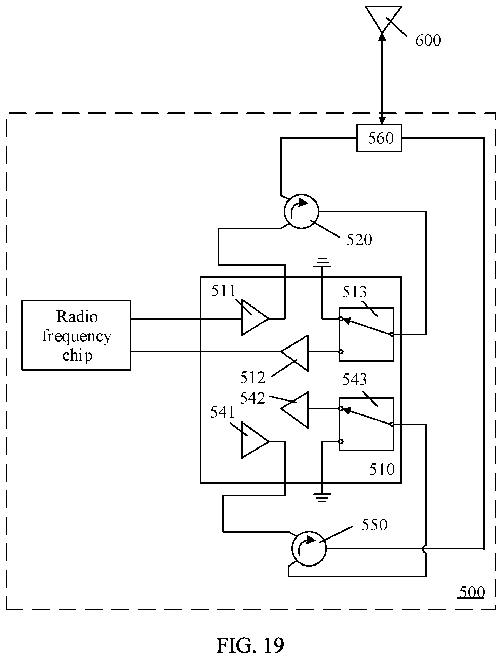

In an embodiment, the third port of the first isolation element 520 and the third port of the second isolation element 550 may be electrically connected to the same antenna element in the antenna module 600. For example, the radio frequency front-end circuit may further include a combiner 560, the third port of the first isolation element 520 and the third port of the second isolation element 550 may be electrically connected to two input ports of the combiner 560 respectively, and an output port of the combiner 560 may be electrically connected to an antenna element in the antenna module 600, as shown in FIG. 19. The combiner 560 may be configured to combine radio frequency signals output by the plurality of transmitting channels, to avoid mutual interference or mutual cancellation.

A person skilled in the art may use different methods to implement the described functions for each specific application, but such implementation should not be considered beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system and apparatus may be implemented in other manners. For example, the apparatus embodiments described above are merely examples, where division into the units is merely logical function-based division and may be otherwise in practice: a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in electrical or another form.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio frequency front-end circuit, comprising:
a radio frequency front-end module and a first isolation element, wherein
the radio frequency front-end module comprises a first power amplifier PA, a first low noise amplifier LNA, and a first switch;
the first PA is connected in series between a first integrated port and a second integrated port of the radio frequency front-end module;
the first LNA is connected in series between a third integrated port of the radio frequency front-end module and a first port of the first switch;
a second port of the first switch is electrically connected to a fourth integrated port of the radio frequency front-end module;
a common port of the first switch is electrically connected to a fifth integrated port of the radio frequency front-end module, and the fifth integrated port is configured to be electrically connected to an antenna module; and
a first port of the first isolation element is electrically connected to the second integrated port, a second port of the first isolation element is electrically connected to the fourth integrated port, and the first port of the first isolation element is unidirectionally conducted to the second port of the first isolation element.

2. The radio frequency front-end circuit according to claim 1, wherein
the radio frequency front-end circuit further comprises a radio frequency chip, wherein
the radio frequency chip comprises a transmitting port and a receiving port; and
the transmitting port is electrically connected to the first integrated port of the radio frequency front-end module, and the receiving port is electrically connected to the third integrated port of the radio frequency front-end module.

3. The radio frequency front-end circuit according to claim 1 or 2, wherein the first isolation element is a circulator or an isolator.

4. The radio frequency front-end circuit according to any one of claims 1 to 3, wherein
the front-end module further comprises a first filter, wherein
the first filter is connected in series between the first integrated port and the first PA.

5. The radio frequency front-end circuit according to any one of claims 1 to 4, wherein
the front-end module further comprises a second filter, wherein
the second filter is connected in series between the first LNA and the first port of the first switch.

6. The radio frequency front-end circuit according to any one of claims 1 to 5, wherein
the common port of the first switch comprises a first common port and a second common port, wherein
the first common port is configured to be electrically connected to a first antenna element in the antenna module; and
the second common port is configured to be electrically connected to a second antenna element in the antenna module.

7. The radio frequency front-end circuit according to any one of claims 1 to 6, wherein
the radio frequency front-end circuit further comprises a second isolation element;
the radio frequency front-end module further comprises a power second PA, a second LNA, and a second switch;
the second PA is connected in series between a sixth integrated port and a seventh integrated port of the radio frequency front-end module;
the second LNA is connected in series between an eighth integrated port of the radio frequency front-end module and a first port of the second switch;
a second port of the second switch is electrically connected to a ninth integrated port of the radio frequency front-end module;
a common port of the second switch is electrically connected to a tenth integrated port of the radio frequency front-end module, and the tenth integrated port is configured to be electrically connected to the antenna module; and
a first port of the second isolation element is electrically connected to the seventh integrated port, a second port of the second isolation element is electrically connected to the ninth integrated port, and the first port of the second isolation element is unidirectionally conducted to the second port of the second isolation element.

8. An electronic device, comprising the radio frequency front-end circuit according to any one of claims 1 to 6.

9. The electronic device according to claim 8, wherein
the electronic device further comprises an antenna module; and
the fifth integrated port is electrically connected to the antenna module.

10. The electronic device according to claim 8 or 9, wherein the electronic device is a router.

11. A radio frequency front-end circuit, comprising:
a radio frequency front-end module and a first isolation element, wherein
the radio frequency front-end module comprises a first PA, a first LNA, and a first switch;
the first PA is connected in series between a first integrated port and a second integrated port of the radio frequency front-end module;
the first LNA is connected in series between a third integrated port of the radio frequency front-end module and a first port of the first switch;
a second port of the first switch is electrically connected to a fourth integrated port of the radio frequency front-end module, and the fourth integrated port is grounded;
a common port of the first switch is electrically connected to a fifth integrated port of the radio frequency front-end module;
a first port of the first isolation element is electrically connected to the second integrated port, a second port of the first isolation element is electrically connected to the fifth integrated port, and a third port of the first isolation element is configured to be electrically connected to an antenna module; and
the first port of the first isolation element is unidirectionally conducted to the third port of the first isolation element, and the third port of the first isolation element is unidirectionally conducted to the second port of the first isolation element.

12. The radio frequency front-end circuit according to claim 11, wherein
the radio frequency front-end circuit further comprises a radio frequency chip, wherein
the radio frequency chip comprises a transmitting port and a receiving port; and
the transmitting port is electrically connected to the first integrated port of the radio frequency front-end module, and the receiving port is electrically connected to the third integrated port of the radio frequency front-end module.

13. The radio frequency front-end circuit according to claim 11 or 12, wherein when the first integrated port receives a radio frequency signal, the common port of the first switch is electrically connected to the second port of the first switch.

14. The radio frequency front-end circuit according to any one of claims 11 to 13, wherein the first isolation element is a circulator.

15. The radio frequency front-end circuit according to any one of claims 11 to 14, wherein
the front-end module further comprises a first filter, wherein
the first filter is connected in series between the first integrated port and the first PA.

16. The radio frequency front-end circuit according to any one of claims 11 to 15, wherein
the front-end module further comprises a second filter, wherein
the second filter is connected in series between the first LNA and the first port of the first switch.

17. The radio frequency front-end circuit according to any one of claims 11 to 16, wherein
the radio frequency front-end circuit further comprises the first isolation element;
the radio frequency front-end module further comprises a second PA, a second LNA, and a second switch;
the second PA is connected in series between a sixth integrated port and a seventh integrated port of the radio frequency front-end module;
the second LNA is connected in series between an eighth integrated port of the radio frequency front-end module and a first port of the second switch;
a second port of the second switch is electrically connected to a ninth integrated port of the radio frequency front-end module, and the ninth integrated port is grounded;
a common port of the second switch is electrically connected to a tenth integrated port of the radio frequency front-end module;
a first port of the second isolation element is electrically connected to the seventh integrated port, a second port of the second isolation element is electrically connected to the tenth integrated port, and a third port of the second isolation element is configured to be electrically connected to the antenna module; and
the first port of the second isolation element is unidirectionally conducted to the third port of the second isolation element, and the third port of the second isolation element is unidirectionally conducted to the second port of the second isolation element.

18. An electronic device, comprising the radio frequency front-end circuit according to any one of claims 11 to 16.

19. The electronic device according to claim 18, wherein
the electronic device further comprises an antenna module; and
the third port of the first isolation element is electrically connected to the antenna module.

20. The electronic device according to claim 18 or 19, wherein the electronic device is a router.
